# EUROPEAN PATENT APPLICATION

(11) **EP 4 817 719 A1**
(43) Date of publication of application: **07.10.2026**
(21) Application number: 24897314.1
(22) Date of filing: 14.11.2024
(51) Int. Cl.: B01D 39/16, B01D 46/00, D04H 1/4374, D04H 1/4382, D21H 13/24, D21H 15/02, D21H 27/30

(54) **AIR FILTER FILTRATION MATERIAL**

(30) Priority: 28.11.2023 JP 2023200388
(71) Applicant: Toray Industries, Inc., Tokyo 103-8666 (JP)
(72) Inventor: ISHII, Kentaro, Otsu-shi, Shiga 520-8558 (JP); KANO, Hidekazu, Otsu-shi, Shiga 520-8558 (JP)
(74) Representative: Mewburn Ellis LLP
(86) International application number: PCT/JP2024/040453
(87) International publication number: WO 2025/115627

(57) **Abstract**

This air filter filtration material comprises a plurality of layers of nonwoven fabric and has a performance index of at least 0.023. At least one of the layers of nonwoven fabric contains at least two kinds of organic fibers A and B having different fiber diameters. The average fiber diameter of the organic fibers A is 0.01-0.60 µm, and the average fiber diameter of the organic fibers B is 1.0-30 µm. Provided is an air filter filtration material suitable for an air filter having both high collection efficiency and low pressure loss.

## Description

### TECHNICAL FIELD

The present invention relates to an air-filter medium suitable for an air filter.

### BACKGROUND ART

In recent years, there has been an increasing demand for space cleaning, and air filters that remove fine dust in the air are used in a wide range of fields from living environments to industries, such as countermeasures against health problems due to dust having a particle size of 2.5 µm or less, and the elimination of dust in the manufacture of semiconductors and pharmaceuticals. In particular, in a space requiring extremely highly clean air, such as a cleanroom and semiconductor manufacturing equipment, a high-performance air filter represented by a high efficiency particulate air filter (HEPA filter) or an ultra low penetration air filter (ULPA filter) is used, and a nonwoven fabric made of glass fibers or a porous membrane made of polytetrafluoroethylene (PTFE) is conventionally used as an air-filter medium of a HEPA filter or an ULPA filter.

However, both of the air filters formed of air-filter media made of glass fibers and PTFE have been landfilled after use, and there has been a problem that the environmental load is large. Furthermore, ULPA filters are used in a cleanroom, semiconductor manufacturing equipment, and the like in semiconductor manufacturing and the like, but when a filter medium made of glass fibers is used, boron that adversely affects semiconductor manufacturing is discharged, and thus filter media made of PTFE are generally selected and used. However, PFOA (perfluorooctanoic acid) manufactured as a by-product in the manufacture of PTFE is an environmentally hazardous substance that is hardly decomposed in nature, and there is a problem that PFOA is accumulated in living bodies and is toxic, and an alternative material is required.

Therefore, with the recent increase in environmental awareness and compliance awareness, various filter media made of ultrafine polyester fibers having a smaller environmental load and having excellent filter performance have been proposed.

For example, Patent Document 1 proposes a wet-laid nonwoven fabric having a multilayer structure of two or more layers in which there is no interface between two adjacent layers, the nonwoven fabric being made using short-cut nanofibers made of a fiber-forming thermoplastic polymer and cut so that the single fiber diameter (D) is 100 to 1000 nm and the ratio (L/D) of the fiber length (L) to the single fiber diameter (D) is within the range of 100 to 2500. According to this description, it is possible to provide a filter having high collection efficiency, low pressure loss, and a high filter life.

In addition, Patent Document 2 describes an air-filter medium using a nonwoven fabric containing three types of polyester fibers: a nanofiber having a fiber diameter of 200 to 800 nm, a fiber thicker than the nanofiber, and a binder fiber. According to this description, it is possible to impart excellent pleating property and resistance to wind pressure deformation, a low pressure loss, and high collection performance.

### PRIOR ART DOCUMENTS

### PATENT DOCUMENTS

Patent Document 1: Japanese Patent Laid-open Publication No. 2013-126626
Patent Document 2: Japanese Patent Laid-open Publication No. 2015-140495

### SUMMARY OF THE INVENTION

### PROBLEMS TO BE SOLVED BY THE INVENTION

In the method described in Patent Document 1, although an air-filter medium excellent in high collection efficiency and low pressure loss can be obtained, the collection efficiency required for the HEPA filter and the ULPA filter is not achieved, and the effect is insufficient from the viewpoint of achieving both low pressure loss and high collection efficiency.

In addition, in the method described in Patent Document 2, a thin air-filter medium excellent in pleating processability can be obtained, and furthermore, the collection efficiency required for the HEPA filter or the ULPA filter can be reached, but the pressure loss is high, and the effect is insufficient from the viewpoint of achieving both the low pressure loss and the high collection efficiency.

An object of the present invention is to solve the above-described problems of the prior art, and to provide an air-filter medium suitable for an air filter having both high collection efficiency and low pressure loss required for a HEPA filter and an ULPA filter, and an air filter using the air-filter medium.

### SOLUTIONS TO THE PROBLEMS

(1) An air-filter medium including a plurality of layers of nonwoven fabric and having a quality factor of 0.023 or more, in which at least one of the layers of nonwoven fabric contains at least two types of organic fibers A and B having different fiber diameters, an average fiber diameter of the organic fiber A is 0.01 to 0.60 µm, and an average fiber diameter of the organic fiber B is 1.0 to 30 µm.
(2) The air-filter medium according to (1), having a collection efficiency of 99.97% or more for particles having a particle size of 0.3 µm.
(3) The air-filter medium according to (1), having a collection efficiency of 99.9995% or more for particles having a particle size of 0.15 µm.
(4) The air-filter medium according to (1), in which at least one of the layers of nonwoven fabric has a quality factor of 0.023 or more.
(5) The air-filter medium according to (1), in which the nonwoven fabric further contains a binder fiber.
(6) An air filter including the air-filter medium according to any one of (1) to (5).
(7) A fan filter unit including the air filter according to (6).
(8) A cleanroom or semiconductor manufacturing equipment including the air filter according to (6).

### EFFECTS OF THE INVENTION

The present invention can provide an air-filter medium suitable for an air filter having both high collection efficiency and low pressure loss required for a HEPA filter and an ULPA filter.

### EMBODIMENT OF THE INVENTION

An air-filter medium of the present invention is an air-filter medium including at least two types of organic fibers, in which a plurality of layers of nonwoven fabric including fibers A having a fiber diameter of less than 0.8 µm and an average fiber diameter of 0.01 to 0.60 µm and fibers B having a fiber diameter of 0.8 µm or more and an average fiber diameter of 1.0 to 30 µm are included, and a quality factor is 0.023 or more.

### [Nonwoven Fabric]

First, the nonwoven fabric in the present invention will be described in detail.

The fibers A and B used in the nonwoven fabric in the present invention are organic fibers. The organic fibers in the present invention are a fibrous material containing an organic substance as a main component. Specific examples of the organic fibers include, but are not limited to, cellulose manufactured from wood pulp or the like, natural fibers such as cotton, hemp, wool, and silk, regenerated fibers such as rayon, semi-synthetic fibers such as acetate, and synthetic fibers typified by polyester, nylon, acrylic, and the like. Among them, from the viewpoint of mechanical properties and dimensional stability, synthetic fibers made of a thermoplastic polymer are preferable. Specific examples of the thermoplastic polymer include, but are not limited to, polyesters such as polyethylene terephthalate (PET), polytrimethylene terephthalate, polybutylene terephthalate, polyethylene naphthalate, and polylactic acid; polyamides such as polyamide 6, polyamide 66, and polyamide 610; polyolefins such as polyethylene, polypropylene, and polymethylpentene; thermoplastic polymers such as polycarbonate, polyacrylate, polyphenylene sulfide, and thermoplastic polyurethane; and copolymers thereof. Among them, the polyester such as polyethylene terephthalate, polytrimethylene terephthalate, and polybutylene terephthalate; the polyamide such as polyamide 6 and polyamide 66; and the polyphenylene sulfide are preferable because they have both mechanical properties and heat resistance.

The organic fibers in the present invention may be subjected to various modifications by adding secondary additives as long as the effects of the present invention are not impaired. Specific examples of the secondary additives include, but are not limited to, a compatibilizer, a plasticizer, an antioxidant, an ultraviolet absorber, an infrared ray absorbent, a fluorescent brightening agent, a mold releasing agent, an antibacterial agent, a nucleating agent, a thermal stabilizer, a flame retardant, an antistatic agent, a color protection agent, an adjustor, a delustering agent, an antifoaming agent, a preservative, a gelatinizer, latex, a filler, ink, a coloring agent, a dye, a pigment, and a perfume. These secondary additives may be used singly or in combination.

The fibers A used for the nonwoven fabric in the present invention have a fiber diameter of less than 0.8 µm and an average fiber diameter of 0.01 to 0.60 µm. The smaller the fiber diameter, the higher the specific surface area, which is preferable because high collection performance is exhibited when formed into a nonwoven fabric. However, when the average fiber diameter is 0.01 µm or more, handleability and formability at the time of processing are improved in addition to the high collection performance, which provides a nonwoven fabric excellent in durability when used. The average fiber diameter is more preferably 0.05 µm or more, still more preferably 0.10 µm or more. On the other hand, when the average fiber diameter is 0.60 µm or less, excellent collection performance is exhibited when formed into a nonwoven fabric due to the effect of a high specific surface area caused by the small fiber diameter. The average fiber diameter is more preferably 0.50 µm or less.

The fibers B used for the nonwoven fabric in the present invention have a fiber diameter of 0.8 µm or more and an average fiber diameter of 1.0 to 30.0 µm. When the average fiber diameter is 1.0 µm or more, the fibers become structural fibers for maintaining the shape of the nonwoven fabric in the nonwoven fabric, and the fibers A are not excessively densified, so that an increase in pressure loss can be suppressed, and a nonwoven fabric having both high collection performance and low pressure loss can be obtained. The average fiber diameter is more preferably 2.0 µm or more, still more preferably 3.0 µm or more. On the other hand, when the average fiber diameter is 30.0 µm or less, it is possible to suppress coming-off of the fibers A thinner than the fibers B at the time of processing the wet-laid nonwoven fabric described later, and the fibers serve as a scaffold of the fibers A in the obtained nonwoven fabric, so that three-dimensionally homogeneous fine spaces can be formed. The average fiber diameter of the fibers B is more preferably 28.0 µm or less, still more preferably 25.0 µm or less.

In the nonwoven fabric in the present invention, various binders such as a fibrous binder and an adhesive can be used for physically bonding fibers constituting the nonwoven fabric to each other by thermal bonding. The binder in this case is not particularly limited, but for example, core-sheath fibers in which a thermoplastic polymer having a melting point of 150°C or less is disposed as a sheath can be suitably employed. When such core-sheath fibers are used, a nonwoven fabric is formed and then subjected to a drying step using a Yankee dryer, an air-through dryer, or the like, or a heat treatment step using a calender or the like, whereby the sheath component on the surface of the binder fibers is melted and bonded to other fibers constituting the nonwoven fabric, so that the rigidity of the nonwoven fabric can be enhanced, which is preferable. Furthermore, the binder fibers are preferable because their core component can contribute to ensuring the strength of the nonwoven fabric. Note that when the melting point of the core component of the binder fibers is higher than that of the sheath component and the difference in the melting points is 20°C or more, the sheath component on the surface of the binder fibers is easily sufficiently melted, and the decrease in orientation of the core component is suppressed, so that sufficient thermal adhesion and high rigidity can be achieved, which is preferable. An undrawn yarn having a degree of crystallinity of the fibers B of 20% or less can be used as a binder. By softening and flowing by heat treatment, it is possible to firmly and uniformly bond fibers to each other.

In the nonwoven fabric in the present invention, the blending ratios (weight ratios) of the fibers A and B can be calculated from a value obtained by dividing the weight of the fibers A or B by the total weight of the entire fibers A and B. When the binder fibers are used in addition to the fibers A and B, the blending ratio can be calculated from a value obtained by dividing the weight of the fibers A or B by the total weight of the fibers A and B and the binder. As rough indications of the blending ratios of the fibers A and B, the blending ratio of the fibers A is preferably 2 to 55 wt%, and the blending ratio of the fibers B is preferably 5 to 90 wt%. When the blending ratio of the fibers A is 2.5 wt% or more, excellent collection performance is exhibited in the form of a nonwoven fabric due to the effect of a high specific surface area derived from the small fiber diameter of the fibers A, which is preferable. The blending ratio of the fibers A is more preferably 3 wt% or more, still more preferably 5 wt% or more. On the other hand, when the blending ratio of the fibers A is 55 wt% or less, more preferably 50 wt% or less, the fibers A are inhibited from being excessively densified in the nonwoven fabric, an increase in pressure loss can be suppressed, and a nonwoven fabric having both high collection performance and low pressure loss can be obtained, which is preferable. When the blending ratio of the fibers B is 5 wt% or more, the fibers B can function as structural fibers for maintaining the shape of the nonwoven fabric, and the fibers A are not excessively densified, so that an increase in pressure loss can be suppressed, and the fibers A thinner than the fibers B can fall off during processing of the wet-laid nonwoven fabric described later, which is preferable. The blending ratio of the fibers B is more preferably 7 wt% or more, still more preferably 10 wt% or more.

The basis weight of the nonwoven fabric in the present invention is preferably 3 to 100 g/m². The basis weight of the nonwoven fabric in the present invention refers to a value measured by the method described in the Examples section. When the basis weight is 3 g/m² or more, a uniform nonwoven fabric having a small difference in density and excellent durability at the time of use can be obtained, which is preferable. The basis weight is more preferably 5 g/m² or more, still more preferably 7 g/m² or more. On the other hand, when the basis weight is 100 g/m² or less, handleability and formability at the time of processing the nonwoven fabric are improved, which is preferable. The basis weight is more preferably 80 g/m² or less, still more preferably 70 g/m² or less.

### [Collection Efficiency and Pressure Loss]

The quality factor is an index for evaluating the performance of the filter, and indicates the potential of the filter. Specifically, the quality factor can be calculated by the following equation from the collection efficiency and the pressure loss of the filter described later. 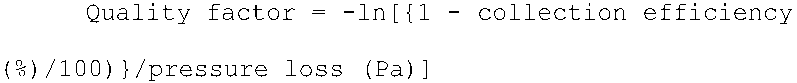 Quality factor = -ln[{1 - collection efficiency (%)/100)}/pressure loss (Pa)]

The higher the quality factor is, the higher the performance of the filter evaluated is, and the quality factor is an important index for comprehensively evaluating the performance of the filter.

The collection efficiency is an index indicating how many particles can be collected by the nonwoven fabric or the air-filter medium. For example, the number (the number of upstream particles) of particles supplied to the nonwoven fabric or the air-filter medium and the number (the number of downstream particles) of particles that have passed through the nonwoven fabric or the air-filter medium are measured with a particle counter or the like, the particle penetration is calculated, and the collection efficiency can be calculated from the particle penetration by the following formula. 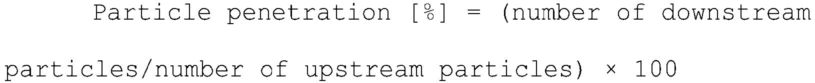 Particle penetration [%] = (number of downstream particles/number of upstream particles) × 100 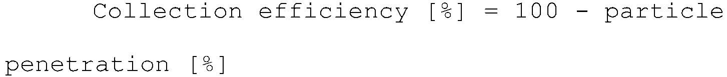 Collection efficiency [%] = 100 - particle penetration [%]

In the JIS standard (JIS Z 8122), HEPA is specified to have a collection efficiency of 99.97% or more for particles measuring 0.3 µm, and ULPA is specified to have a collection efficiency of 99.9995% or more for particles measuring 0.15 µm. When the nonwoven fabric or the air-filter medium is evaluated, the particle size to be measured is selected according to the target filter grade. The collection efficiency can be automatically measured from a particle counter built in a device when a filter collection efficiency tester (model 3160 manufactured by TSI Inc.) or the like is used.

When air passes through the nonwoven fabric or the air-filter medium, the flow of air is hindered, and resistance occurs. This resistance causes a difference in air pressure (static pressure) before and after passing through the nonwoven fabric or the air-filter medium, and this differential pressure value is the pressure loss (Pa). When the pressure loss is large, energy (for example, power of the fan) required to pass through the air filter increases, and energy efficiency decreases. In the JIS standard (JIS Z 8122), in both HEPA and ULPA, the pressure loss is specified to be 245 Pa or less in the state of an air filter. However, this is a value after processing the air-filter medium into a pleated shape, and the pressure loss of the filter medium alone before the pleating is preferably 350 Pa or less, for example, when air is flown at a face velocity of 3.3 m/min. The pressure loss can be automatically measured with a pressure gauge (including a differential pressure gauge) built in a device when a filter collection efficiency tester (model 3160 manufactured by TSI Inc.) or the like is used.

### [Air-filter Medium]

The air-filter medium of the present invention is a layered nonwoven fabric, and is formed by layering a plurality of layers of the nonwoven fabric described above. Since the particle penetration of the nonwoven fabric is the product of the particle penetrations of the respective nonwoven fabrics when a plurality of nonwoven fabrics are layered, the particle penetration after layering the plurality of nonwoven fabrics is reduced, and the collection efficiency is increased. On the other hand, since the pressure loss is the sum of the pressure losses of the respective nonwoven fabrics, the pressure loss increases by layering a plurality of nonwoven fabrics. To give an example of specific numbers, when two nonwoven fabrics having a particle penetration of 10% (collection efficiency of 90%) and a pressure loss of 100 Pa are layered, the particle penetration is 1% (10% [= 0.1] × 10% [= 0.1] = 1% [= 0.01]), and the pressure loss is 200 Pa (100 Pa + 100 Pa = 200 Pa). Both the particle penetration of 10% (collection efficiency of 90%) and the pressure loss of 100 Pa before layering (one nonwoven fabric) and the particle penetration of 1% (collection efficiency of 99%) and the pressure loss of 200 Pa after layering (two nonwoven fabrics) show a quality factor of 0.023 indicating the potential as a filter, and the balance between the collection efficiency and the pressure loss itself has not changed. When the basis weight is increased or the blending ratio of the fibers A is increased so as to increase the collection efficiency with one nonwoven fabric, the increase in the pressure loss becomes larger as the collection efficiency is improved, and thus the balance between the collection efficiency and the pressure loss tends to deteriorate and the quality factor decreases. That is, in order to improve the quality factor, it is possible to lower the degree of difficulty in manufacture by using a multilayer structure rather than using one nonwoven fabric. Therefore, in the case of manufacturing a filter medium having a collection efficiency of 99.97%, a pressure loss of 350 Pa, and a quality factor of 0.023 required for a HEPA filter, the degree of difficulty in manufacture is lower when two nonwoven fabrics having a collection efficiency of 98.27%, a pressure loss of 175 Pa, and a quality factor of 0.023 or three nonwoven fabrics having a collection efficiency of 93.31%, a pressure loss of 117 Pa, and a quality factor of 0.023 are layered than when the filter medium is composed of one nonwoven fabric. Note that the nonwoven fabrics to be layered do not need to have the same performance, and as an example, by layering a nonwoven fabric having a collection efficiency of 70.00%, a pressure loss of 100 Pa, and a quality factor of 0.012 as a first layer and a nonwoven fabric having a collection efficiency of 99.90%, a pressure loss of 250 Pa, and a quality factor of 0.028 as a second layer, it is possible to achieve a collection efficiency of 99.97%, a pressure loss of 350 Pa, and a quality factor of 0.023. As described above, by adopting the multilayer structure, the difficulty in manufacture of the nonwoven fabric is lowered, and as a result, it can be expected that the cost of manufacture can be reduced. On the other hand, when the number of nonwoven fabrics to be layered is excessive, the work related to the nonwoven fabric manufacturing process and the layering process increases, and the cost benefit of the multilayer structure is lost. Therefore, the number of nonwoven fabrics to be layered is preferably five or less, more preferably three or less.

The air-filter medium of the present invention needs to have a quality factor of 0.023 or more after the nonwoven fabrics are layered. When the quality factor is 0.023 or more, the air-filter medium has a good balance between the collection efficiency and the pressure loss, and can be useful in various industries such as HEPA filter applications and ULPA filter applications.

The air-filter medium of the present invention may have a configuration in which an air-permeable support material other than the nonwoven fabric in the present invention is further layered in order to improve the strength of the filter medium. The material and structure of the air-permeable support material are not particularly limited, but for example, a nonwoven fabric, a woven fabric, a metal mesh, a resin net, or the like is used. Among them, a dry-laid nonwoven fabric having heat fusibility is preferable from the viewpoint of strength, collection property, flexibility, and workability. Furthermore, the dry-laid nonwoven fabric may be a nonwoven fabric in which some or all fibers constituting the dry-laid nonwoven fabric have a core/sheath structure, or a two-layer nonwoven fabric composed of two layers of a low melting point material and a high melting point material. The material of the dry-laid nonwoven fabric is not particularly limited, and polyesters such as polyethylene terephthalate, polytrimethylene terephthalate, polybutylene terephthalate, polyethylene naphthalate, and polylactic acid; polyamides such as polyamide 6, polyamide 66, and polyamide 610; polyolefins such as polyethylene, polypropylene, and polymethylpentene; thermoplastic polymers such as polycarbonate, polyacrylate, polyphenylene sulfide, and thermoplastic polyurethane; and copolymers thereof or composites thereof can be used. The dry-laid nonwoven fabric having a core/sheath structure is preferably one in which the core component has a higher melting point than the sheath component. Examples of the combination of the core/sheath materials include polyethylene terephthalate/polyethylene and high-melting-point polyethylene terephthalate/low-melting-point polyethylene terephthalate. The air-permeable support material can be joined to the nonwoven fabric in the present invention by partial melting of the air-permeable support material by heating, or by melting of a hot-melt resin, using an anchor effect, or using adhesion of a reactive adhesive or the like.

The basis weight and thickness of the air-permeable support material are not particularly limited, and the air-permeable support material may be disposed between the nonwoven fabrics in the present invention, or may be disposed so that the nonwoven fabrics in the present invention are layered in advance and the air-permeable support material is further layered on the multilayered nonwoven fabric.

In the air-filter medium of the present invention, a pre-collection layer may be further layered (usually on the upstream side of the airflow passing through the filter medium) in order to prolong the life of the air filter. As the pre-collection layer, for example, one obtained by a melt-blown method is used. Examples of the material of the pre-collection layer include polyesters such as polyethylene terephthalate, polytrimethylene terephthalate, polybutylene terephthalate, polyethylene naphthalate, and polylactic acid; polyamides such as polyamide 6, polyamide 66, and polyamide 610; polyolefins such as polyethylene, polypropylene, and polymethylpentene; thermoplastic polymers such as polycarbonate, polyacrylate, polyphenylene sulfide, and thermoplastic polyurethane; and copolymers thereof. The pre-collection layer can be joined to the layered nonwoven fabric by, for example, thermal lamination using a hot-melt resin.

The air-filter medium of the present invention preferably has a collection efficiency of 99.97% or more for particles having a particle size of 0.3 µm. This makes it possible to use the air-filter medium for a HEPA filter in a cleanroom in the fields of medicine, medical care, food, and semiconductors. Furthermore, a collection efficiency of 99.99% or more with respect to particles having a particle size of 0.15 µm is preferable because the air-filter medium can make air extremely clean as a filter medium for a cleanroom, semiconductor manufacturing equipment, and the like.

The air-filter medium of the present invention preferably has a collection efficiency of 99.9995% or more for particles having a particle size of 0.15 µm. In this way, the air-filter medium can be used for an ULPA filter that can also be used for semiconductor manufacturing equipment and the like.

The air-filter medium of the present invention preferably has an average pore size of 0.1 to 10 µm. The average pore size in the present invention is an average size of through-holes formed in the nonwoven fabric sheet, and refers to a value measured by the method described in the Examples section. An average pore size of 0.1 µm or more is preferable because a stable fluid flow can be secured. On the other hand, when the average pore size is 10 µm or less, the fluid can uniformly flow into the entire sheet while the flow of the fluid passing through the wet-laid nonwoven fabric sheet is not disturbed, which is preferable.

The air-filter medium of the present invention preferably has a thickness of 0.05 to 1.0 mm. The thickness of the air-filter medium in the present invention refers to a value measured by the method described in the Examples section. When the thickness is 0.05 mm or more, handleability and formability at the time of processing the nonwoven fabric are good, and an air-filter medium excellent in durability at the time of use can be obtained, which is preferable. In addition, when used as an air-filter medium, formability in pleating or the like is good, which is preferable. The thickness is more preferably 0.1 mm or more, still more preferably 0.15 mm or more. On the other hand, a thickness of 1.0 mm or less is preferable because it is possible to suppress an increase in pressure loss due to densification of the nonwoven fabric. In addition, when pleating is performed to form an air filter, a region where adjacent portions of the filter medium are in contact with each other is reduced due to the thickness of the filter medium, so that a filtration area can be secured, and an increase in pressure loss can be suppressed, which is preferable. The thickness is more preferably 0.9 mm or less, still more preferably 0.8 mm or less.

### [Method for Manufacturing Nonwoven Fabric]

Next, an example of a method for manufacturing the nonwoven fabric in the present invention will be described below.

First, the fibers B and, if necessary, short fibers of a fibrous binder are put into an aqueous medium and stirred with a disintegrator to prepare a fiber dispersion in which the fibers are uniformly dispersed. In this step, it is possible to adjust the dispersibility of the fibers according to the charged amount of the fibers, the amount of the aqueous medium, the stirring time, and the like, and it is preferable that the short fibers are dispersed in the aqueous medium as uniformly as possible. In addition, a dispersant may be added in order to improve the dispersibility of the fibers in the aqueous medium, but when the nonwoven fabric is subjected to post-processing, the amount of the dispersant to be added is preferably kept to the minimum necessary so as not to affect the processability.

Next, a fiber dispersion of the fibers A in which the fibers A are uniformly dispersed in an aqueous medium is prepared according to a method described later. The fiber dispersion of the fibers A and the fiber dispersion of the fibers B (and the fibrous binder if necessary) described above are mixed to obtain a papermaking stock, and the stock is subjected to wet-laid process to obtain a nonwoven fabric in which the fibers A are uniformly disposed.

The fibers A in the present invention can be manufactured by using island-in-sea fibers composed of two or more types of polymers having different dissolution rates in a solvent. The island-in-sea fibers in the present invention are fibers having a structure in which an island component composed of a hardly soluble polymer is scattered in a sea component composed of an easily soluble polymer.

As a method for making the island-in-sea fibers, island-in-sea composite spinning by melt spinning is suitable from the viewpoint of high productivity and continuous manufacturing, and a method using an island-in-sea composite spinneret is preferable from the viewpoint of excellent control of the fiber diameter and cross-sectional shape.

Specific examples of the hardly soluble polymer used for the island component in the present invention include, but are not limited to, polyesters such as polyethylene terephthalate, polytrimethylene terephthalate, polybutylene terephthalate, polyethylene naphthalate, and polylactic acid; polyamides such as polyamide 6, polyamide 66, and polyamide 610; polyolefins such as polyethylene, polypropylene, and polymethylpentene; thermoplastic polymers such as polycarbonate, polyacrylate, polyphenylene sulfide, and thermoplastic polyurethane; and copolymers thereof.

From the viewpoint of simplifying the sea component elution step, the easily soluble polymer used for the sea component in the present invention preferably exhibits easy solubility in an aqueous solvent, hot water, or the like. As the easily soluble polymer in the present invention, copolymerized polyester, polylactic acid, polyvinyl alcohol, or the like is preferably used, and in particular, polyester copolymerized with polyethylene glycol or sodium 5-sulfoisophthalate alone or in combination thereof, or polylactic acid is preferably used from the viewpoint of handleability and easy dissolution in a low concentration aqueous solvent.

The term "easily soluble" in the present invention means that the dissolution rate ratio (easily soluble polymer/hardly soluble polymer) is 100 or more based on the hardly soluble polymer in the solvent used for the dissolution treatment. In consideration of simplification and time reduction of the dissolution treatment, the dissolution rate ratio is preferably large, more preferably 1000 or more, still more preferably 10,000 or more. Such a range is preferable because the dissolution treatment is completed in a short time, and the fibers A suitable for the present invention can be obtained without unnecessarily deteriorating the hardly soluble polymer.

In addition, from the viewpoint of the solubility in the aqueous solvent and the simplification of the treatment of the waste liquid generated at the time of dissolution, it is particularly preferable to use polylactic acid, a polyester in which 3 to 20 mol% of sodium 5-sulfoisophthalate is copolymerized, and a polyester in which 5 to 15 wt% of polyethylene glycol having a weight-average molecular weight of 500 to 3000 is copolymerized in addition to sodium 5-sulfoisophthalate described above.

As described above, examples of a suitable combination of polymers of the island-in-sea fibers described above include, but are not limited to, a combination in which the sea component is either polyester obtained by copolymerizing 3 to 20 mol% of sodium 5-sulfoisophthalate and copolymerizing 5 to 15 wt% of polyethylene glycol having a weight-average molecular weight of 500 to 3000, or polylactic acid, and the island component is any of polyethylene terephthalate, polytrimethylene terephthalate, polybutylene terephthalate, polyethylene naphthalate, and copolymers thereof.

The spinning temperature of the island-in-sea fibers described above is preferably a temperature at which a polymer having a high melting point or a high viscosity mainly exhibits fluidity, among the hardly soluble polymer and the easily soluble polymer determined from the viewpoint described above. The temperature at which the polymer exhibits fluidity varies depending on the characteristics and molecular weight of the polymer, but the melting point of the polymer is used as a guide, and the spinning temperature may be set to the melting point plus 60°C or less. Such a range is preferable because thermal decomposition of the polymer or the like in the spinning head or the spinning pack is suppressed, so that a decrease in molecular weight is suppressed, and the island-in-sea fibers can be favorably manufactured.

In the present invention, as described above, in order to obtain ultrafine fibers by dissolving and removing the sea component from the island-in-sea fibers, the island-in-sea composite spinneret exemplified in Japanese Patent No. 5740877 can be suitably employed, but the invention is not limited thereto.

The yarn melted and discharged from the island-in-sea composite spinneret is cooled and solidified, converged by applying an oil agent or the like, and taken up by a roller having a specified peripheral speed. The take-up speed can be determined from the discharge amount, the intended fiber diameter, and the like, and is preferably 100 to 7000 m/min from the viewpoint of stably manufacturing the island-in-sea fibers. The spun island-in-sea fibers are preferably drawn from the viewpoint of improving mechanical properties and thermal stability, and the spun multifilament may be once wound and then drawn, or may be drawn following spinning without being wound.

It is preferable that the island-in-sea fibers described above are formed into tows in which tens to millions of filaments are bundled, and cut to a desired fiber length using a cutting machine such as a guillotine cutter, a slice machine, and a cryostat. The fiber length L after the cutting process is preferably such that the ratio (L/R1) to the diameter R1 (corresponding to the average fiber diameter of the fibers A) of the island component of the island-in-sea fibers is 1000 to 6000. Such a range is preferable because the number of contact points between fibers increases when a nonwoven fabric is formed, the formation of a bridge structure between fibers is promoted, and the reinforcing effect of the nonwoven fabric can be enhanced. When the ratio L/R1 is 1000 or more, the fibers A are inhibited from falling off from the nonwoven fabric during nonwoven fabric processing by wet-laid process, which is preferable. The ratio L/R1 is more preferably 1500 or more, still more preferably 2000 or more. On the other hand, when the ratio L/R1 is 6000 or less, aggregation of fibers A in an aqueous medium is suppressed, and a nonwoven fabric having high uniformity can be obtained, which is preferable. The ratio L/R1 is more preferably 5500 or less, still more preferably 5000 or less.

The fibers A can be manufactured by dissolving and removing the sea component from the above-described island-in-sea fibers. That is, the island-in-sea fibers after the cutting described above may be immersed in a solvent or the like capable of dissolving the easily soluble polymer of the sea component to remove the easily soluble polymer. When the easily soluble polymer is copolymerized polyethylene terephthalate copolymerized with sodium 5-sulfoisophthalate, polyethylene glycol, or the like, or polylactic acid, it is possible to use an aqueous alkali solution such as an aqueous sodium hydroxide solution. In the case of an aqueous alkali solution, the bath ratio of the island-in-sea fibers to the aqueous alkali solution (weight (g) of the island-in-sea fibers : weight (g) of the aqueous alkali solution) is preferably 1 : 5 to 1 : 10,000, more preferably 1 : 10 to 1 : 5000. Such a range is preferable because the fibers A are inhibited from being unnecessarily entangled when the easily soluble polymer of the sea component is dissolved.

In addition, the alkali concentration of the aqueous alkali solution is preferably 0.1 to 5 wt%, more preferably 0.5 to 3 wt%. Such a range is preferable because the dissolution of the easily soluble polymer of the sea component is completed in a short time, and a fiber dispersion in which the fibers A are uniformly dispersed can be obtained without unnecessarily deteriorating the hardly soluble polymer of the island component. In addition, the temperature of the aqueous alkali solution is not particularly limited, but when the temperature is set to 50°C or more, the progress of the dissolution of the easily soluble polymer of the sea component can be accelerated, which is preferable.

In the present invention, the aqueous solution obtained by dissolving the easily soluble polymer of the sea component from the island-in-sea fibers may be used as a fiber dispersion of the fibers A as it is, or may be used after adding an acid or an alkali to adjust the pH, or after diluting with water. In addition, in the fiber dispersion, a dispersant may be added in order to suppress aggregation of the fibers A over time. Examples of the dispersant include a cationic compound, a nonionic compound, and an anionic compound, and it is particularly preferable to use an anionic compound from the viewpoint of improving dispersibility by electric repulsive force in an aqueous medium. The amount of the dispersant added is preferably 0.001 to 10 times the weight of the fibers A, and such a range is preferable because the dispersibility of the fibers A is secured without impairing the processability at the time of nonwoven fabric processing by wet-laid process.

When the fibers B in the present invention are synthetic fibers made of a thermoplastic polymer, they can be manufactured by performing melt spinning, drawing them as necessary, and then cutting them into desired fiber lengths as described above. Here, the fiber length of the fibers B is preferably 30 mm or less. When the fiber length is 30 mm or less, formation of fiber lumps associated with strong entanglement of fibers during dispersion in an aqueous medium is suppressed, homogeneous nonwoven fabric can be obtained, and the nonwoven fabric can be suitably used as an air-filter medium, which is preferable.

The fiber dispersion of the fibers A prepared in this manner is mixed with the fiber dispersion of the fibers B (and the fibrous binder if necessary), and the mixture is diluted and adjusted to a certain concentration, and then dehydrated on an inclined wire, a circular net, or the like to form a nonwoven fabric by wet-laid process. Examples of the apparatus used for the wet-laid process include, but are not limited to, a cylinder paper machine, a Fourdrinier paper machine, an inclined short-wire former, or a paper machine in combination thereof. In the papermaking process, a three-dimensionally homogeneous nonwoven fabric can be produced by controlling the accumulation of fibers when filtering water by adjusting the papermaking speed and the amount of fibers or aqueous medium in addition to the dispersibility of fibers in the papermaking stock.

The nonwoven fabric formed by wet-laid process is passed through a drying step in order to remove moisture. As the drying method, from the viewpoint that the drying of the nonwoven fabric and the thermal bonding of the thermally adhesive fibers can be simultaneously performed, a method using hot air ventilation (air through) or a method of bringing the nonwoven fabric into contact with a heat rotating roll (thermal calender roll or the like) can be suitably employed.

### [Method for Manufacturing Air-filter Medium]

The air-filter medium of the present invention can be manufactured by arranging a plurality of layers of nonwoven fabrics. At the time of layering, the layered nonwoven fabrics may be joined to each other. In the case of joining, thermal lamination, an adhesive, or the like can be used.

In the case of joining by thermal lamination, the roller of the thermal lamination apparatus is heated to a temperature higher than the glass transition temperature corresponding to the organic fibers or the hot-melt resin constituting the nonwoven fabric, and the nonwoven fabrics are allowed to pass through the roller, so that a part between the nonwoven fabrics can be melted or the hot-melt resin can be melted to join the nonwoven fabrics using the anchor effect.

In the case of joining using an adhesive, the adhesive is applied in the form of points to the surface of the nonwoven fabric to be bonded with a dispenser or the like, and the surface is disposed on the surface of another nonwoven fabric with which the surface to which the adhesive has been applied is to be bonded, so that the nonwoven fabrics can be bonded and joined. The type of the adhesive used for bonding is not particularly limited, and an aqueous adhesive, a solvent adhesive, a resin adhesive, or the like can be used.

### [Applications]

Since the nonwoven fabric of the present invention has high collection efficiency, the air-filter medium using the nonwoven fabric of the present invention can be suitably used as an air-filter medium for an air purifier, an air conditioner, a building air conditioner, an industrial cleanroom, and a passenger compartment of an automobile, a train, and the like. Furthermore, in a space requiring extremely highly clean air, such as a cleanroom and semiconductor manufacturing equipment, it can be suitably used as, for example, an air-filter medium for an air filter of an air conditioner for taking outside air into the cleanroom, an air conditioner for circulating air in the cleanroom, and a fan filter unit installed on a ceiling of the cleanroom or the semiconductor manufacturing equipment. A cleanroom and semiconductor manufacturing equipment including an air filter using the air-filter medium of the present invention are useful in various industries.

### EXAMPLES

Next, the present invention will be described in detail with reference to examples. However, the present invention is not limited only to these examples. Note that each characteristic value in the examples was obtained by the following method.

### A. Average fiber diameter

In an image obtained by photographing the cross section of the fiber with a scanning electron microscope (electron microscope SU-1510 manufactured by Hitachi High-Technologies Corporation), the circumscribed circle diameter of the fiber cross section was measured for 100 arbitrary fibers, and the average thereof was rounded off to one decimal place and the value obtained up to one decimal place was taken as the average fiber diameter.

### B. Fiber length of organic fibers

In an image obtained by photographing the side surface of the fiber with a stereomicroscope (stereomicroscope SZ-61 manufactured by Olympus Corporation), the fiber length was measured for 100 arbitrary fibers, and the average thereof was rounded off to one decimal place and the value obtained up to one decimal place was taken as the fiber length. As the fiber length of the fibers A, the island-in-sea fibers before the sea component was removed were measured.

### C. Volume of whole organic fibers

Using the average fiber diameter and the fiber length of the organic fibers calculated in the above items A and B, the volume of each fiber was calculated assuming that the cross section was a perfect circle. Thereafter, the volume of the whole organic fibers was calculated by adding the volumes of all fibers.

### D. Basis weight

Using, as a sample, the nonwoven fabric obtained in each of examples and comparative examples, the weight of the nonwoven fabric cut into 250 mm × 250 mm square was weighed, and the weight converted to the weight per unit area (1 m²) was rounded off to one decimal place to calculate the basis weight (g/m²) of the nonwoven fabric. The measurement was performed at arbitrary three points per sample, and the average value was rounded off to one decimal place to obtain the basis weight.

### E. Thickness

Using, as a sample, the nonwoven fabric used for the measurement of the item D above, the thickness of the nonwoven fabric was measured using a dial thickness gauge (SM-114 manufactured by TECLOCK Co., Ltd., diameter of measuring element: 10 mmφ, graduation: 0.01 mm, measuring force: 2.5 N or less). The measurement was performed at arbitrary five points per sample, and the average value was rounded off to two decimal places to obtain the thickness (mm) of the nonwoven fabric.

### F. Porosity

Using the basis weight and the thickness of the nonwoven fabric calculated in the above items D and E, the value calculated by the following equation was rounded off to one decimal place to obtain the porosity (%) of the nonwoven fabric. 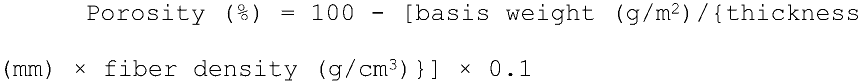 Porosity (%) = 100 - [basis weight (g/m2)/{thickness (mm) × fiber density (g/cm3)}] × 0.1

Note that the fiber density may be obtained by applying the density of fibers constituting the nonwoven fabric, and was calculated as 1.38 g/cm³ in the case of PET.

### G. Collection efficiency

Using the nonwoven fabric or air-filter medium obtained in each of the examples and comparative examples as a sample, the sample cut to a diameter of 12 cm was set using a filter collection efficiency tester (model 3160 manufactured by TSI Inc.). The collection efficiency was measured using particles having a particle size of 0.15 µm or 0.3 µm. The collection efficiency (%) for a particle size of 0.15 µm was measured by passing air containing 20,000 to 30,000 sodium chloride particles having an average particle size of 0.15 to 0.16 µm per 1 m³ at a rate of 31.5 L/min. The collection efficiency (%) for a particle size of 0.30 µm was measured by passing air containing 20,000 to 30,000 sodium chloride particles having an average particle size of 0.30 to 0.31 µm per 1 m³ at a rate of 31.5 L/min.

### H. Pressure loss

Using the nonwoven fabric or air-filter medium obtained in each of the examples and comparative examples as a sample, the sample cut to a diameter of 12 cm was set using a filter collection efficiency tester (model 3160 manufactured by TSI Inc.). The evaluated portion had an opening with a diameter of 11 cm in which the sample was exposed, air was passed at a setting of 31.5 L/min to set the face velocity of the flowing air to 3.3 m/min, and the pressure loss (Pa) was measured.

### I. Quality factor

Using the collection efficiency and pressure loss of the nonwoven fabric calculated in the above items G and H, the value calculated by the following equation was rounded off to three decimal places to obtain the quality factor (1/Pa) of the nonwoven fabric. 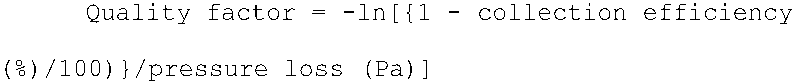 Quality factor = -ln[{1 - collection efficiency (%)/100)}/pressure loss (Pa)]

### Example 1

Polyethylene terephthalate (PET) was used as an island component, and copolymerized PET obtained by copolymerizing 8.0 mol% of sodium 5-sulfoisophthalate and 10 wt% of polyethylene glycol having a molecular weight of 1000 was used as a sea component, and each of them was vacuum-dried at 150°C for 12 hours. Subsequently, the island component and the sea component were supplied at a blending ratio of 50 wt% and 50 wt%, respectively, to an extruder type composite spinning machine to be separately melted, the mixture was allowed to flow into a spinning pack incorporating an island-in-sea composite spinneret (number of island components: 2000, shape of island component: round) at a spinning temperature of 285°C, and a composite polymer stream was discharged from a discharge hole at a discharge rate of 12 g/min to obtain a spun yarn. The spun yarn was cooled with cooling air at a wind temperature of 20°C and a wind speed of 20 m/min, and an oil agent was applied to the yarn with an oiling device to converge the yarn, and the yarn was taken up by a first godet roller rotating at 1000 m/min, and wound with a winder through a second godet roller rotating at the same speed as the first godet roller to obtain an undrawn yarn. Thereafter, the obtained undrawn yarn was drawn 3.4 times between rollers heated to 85°C and 130°C using a drawing machine to obtain island-in-sea fibers (diameter of island component: 0.20 µm).

The obtained island-in-sea fibers were cut so as to have a fiber length of 0.6 mm. The island-in-sea fibers after the cutting process were treated in a 1-wt% aqueous solution of sodium hydroxide at a bath ratio of 1 : 100 at 90°C for 30 minutes, and then neutralized with acetic acid to pH = 7 to obtain a fiber dispersion of the fibers A.

Next, the blending ratio of PET short fibers (fiber diameter: 3.0 µm, fiber length: 3.0 mm) as the fibers B was adjusted to 65 wt% (the blending ratio in the papermaking stock), and the blending ratio of core-sheath PET short fibers (core component: PET, sheath component: copolymerized polyester having a melting point of 110°C copolymerized in a ratio of 60 mol% of terephthalic acid and 40 mol% of isophthalic acid as dicarboxylic acid components, and 85 mol% of ethylene glycol and 15 mol% of diethylene glycol as diol components, core-sheath ratio (weight ratio) = 50 : 50, fiber diameter: 10.0 µm, fiber length: 5.0 mm) as binder fibers C was adjusted to 30 wt% (the blending ratio in the papermaking stock), and the fibers were uniformly mixed and dispersed with water by a disintegrator to prepare a fiber dispersion of the fibers B and binder fibers C.

The fiber dispersion of the fibers A described above was homogeneously mixed with the fiber dispersion of the fibers B and the binder fibers C so that the blending ratio of the fibers A was 5 wt% to prepare a papermaking stock. This papermaking stock was subjected to papermaking using a square sheet machine (250 mm square) manufactured by KUMAGAI RIKI KOGYO Co., Ltd., and then subjected to drying and heat treatment with a rotary dryer in which the roller temperature was set to 110°C, thereby obtaining a nonwoven fabric 1. A nonwoven fabric 2 was obtained in the same manner.

The evaluation results of the obtained nonwoven fabric 1 and nonwoven fabric 2 and the evaluation results of the layered nonwoven fabric (air-filter medium) obtained by layering the nonwoven fabrics 1 and 2 are shown in Table 1. As for the nonwoven fabric 1 and nonwoven fabric 2, the collection efficiencies were 98.2314% and 98.3542% for particles having a particle size of 0.3 µm, respectively, and the quality factors were both 0.024. Both of the nonwoven fabrics had collection efficiencies less than 99.97%, which is the HEPA standard, but by layering the nonwoven fabric 1 and the nonwoven fabric 2, the collection efficiency was 99.9715%, which exceeded the HEPA standard, and the air-filter medium having a quality factor of 0.024 was obtained. It was confirmed that the collection efficiency can be greatly increased by layering the nonwoven fabrics in this manner.

### Example 2

Nonwoven fabrics 3 and 4 were produced in the same manner as in Example 1 except that the blending ratios and basis weights of the fibers A and B were changed as shown in Table 1.

The evaluation results of the obtained nonwoven fabric 3 and nonwoven fabric 4 and the evaluation results of the layered nonwoven fabric (air-filter medium) obtained by layering the nonwoven fabrics 3 and 4 are shown in Table 1. As for the nonwoven fabric 3 and nonwoven fabric 4, the collection efficiencies were 99.3284% and 99.4135% for particles having a particle size of 0.15 µm, and the quality factors were 0.027 and 0.029, respectively. By layering the nonwoven fabric 3 and the nonwoven fabric 4, the collection efficiency was 99.9955%, which was high, and an air-filter medium having a quality factor of 0.028 was obtained. It was confirmed that the collection efficiency can be greatly increased by layering the nonwoven fabrics in this manner.

### Example 3

Nonwoven fabrics 5 and 6 were produced in the same manner as in Example 1 except that the blending ratios of the fibers A and B were changed as shown in Table 1.

The evaluation results of the obtained nonwoven fabric 5 and nonwoven fabric 6 and the evaluation results of the layered nonwoven fabric (air-filter medium) obtained by layering the nonwoven fabrics 5 and 6 are shown in Table 1. As for the nonwoven fabric 5 and nonwoven fabric 6, the collection efficiencies were 99.9412% and 99.9135% for particles having a particle size of 0.15 µm, and the quality factors were 0.037 and 0.038, respectively. Both had collection efficiencies less than 99.9995%, which is the ULPA standard, but by layering a nonwoven fabric 7 and a nonwoven fabric 8, the collection efficiency was 99.9999%, which exceeded the ULPA standard, and the air-filter medium having a quality factor of 0.036 was obtained. It was confirmed that the collection efficiency can be greatly increased by layering the nonwoven fabrics in this manner.

### Example 4

Nonwoven fabrics 7 and 8 were produced in the same manner as in Example 1 except that the blending ratios of the fibers A and B were changed as shown in Table 2 and the binder fibers C were not used.

The evaluation results of the obtained nonwoven fabric 7 and nonwoven fabric 8 and the evaluation results of the layered nonwoven fabric (air-filter medium) obtained by layering the nonwoven fabrics 7 and 8 are shown in Table 2. As for the nonwoven fabric 7 and nonwoven fabric 8, the collection efficiencies were 99.7751% and 99.8742% for particles having a particle size of 0.15 µm, and the quality factors were 0.036 and 0.038, respectively. Both had collection efficiencies less than 99.9995%, which is the ULPA standard, but by layering the nonwoven fabric 7 and the nonwoven fabric 8, the collection efficiency was 99.9996%, which exceeded the ULPA standard, and the air-filter medium having a quality factor of 0.036 was obtained. It was confirmed that the collection efficiency can be greatly increased by layering the nonwoven fabrics in this manner.

### Example 5

Nonwoven fabrics 9 and 10 were produced in the same manner as in Example 1 except that the blending ratios of the fibers A and B were changed as shown in Table 2.

The evaluation results of the obtained nonwoven fabric 9 and nonwoven fabric 10, and further the evaluation results of a layered nonwoven fabric (air-filter medium) obtained by disposing and layering, as an air-permeable support material between the nonwoven fabrics 9 and 10, a spunbond nonwoven fabric ("ELEVES S0303WDO" manufactured by Unitika Ltd. (average fiber diameter: 24 µm, basis weight: 30 g/m², thickness: 0.15 mm)) made of fibers having a core/sheath structure using PET as a core and PE as a sheath are shown in Table 1. As for the nonwoven fabric 9 and nonwoven fabric 10, the collection efficiencies were 99.9125% and 99.9056% for particles having a particle size of 0.15 µm, respectively, and the quality factors were both 0.038. Both had collection efficiencies less than 99.9995%, which is the ULPA standard, but by layering the nonwoven fabric 9, the nonwoven fabric 10, and the air-permeable support material, the collection efficiency was 99.9999%, which exceeded the ULPA standard, and the air-filter medium having a quality factor of 0.038 was obtained. It was confirmed that the collection efficiency can be greatly increased by layering the nonwoven fabrics in this manner.

### Comparative Example 1

Nonwoven fabrics 11 and 12 were produced in the same manner as in Example 1 except that the blending ratios of the fibers A and B were changed as shown in Table 2.

The evaluation results of the obtained nonwoven fabric 11 and nonwoven fabric 12 and the evaluation results of the layered nonwoven fabric (air-filter medium) obtained by layering the nonwoven fabrics 11 and 12 are shown in Table 2. As for the nonwoven fabric 11 and nonwoven fabric 12, the collection efficiencies were 96.2653% and 97.8426% for particles having a particle size of 0.3 µm, and the quality factors were 0.020 and 0.023, respectively. When the nonwoven fabric 11 and the nonwoven fabric 12 were layered, the collection efficiency was 99.9241%, which was under the HEPA standard, and an air-filter medium having a quality factor of 0.022 was obtained. As described above, it has been confirmed that even when nonwoven fabrics having low potential performance are layered, the quality factor itself indicating the potential performance is not improved.

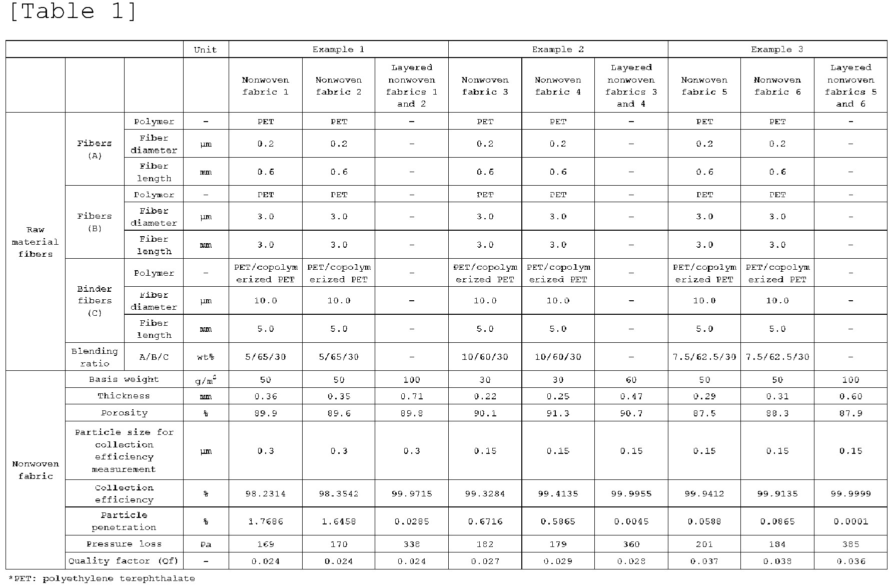

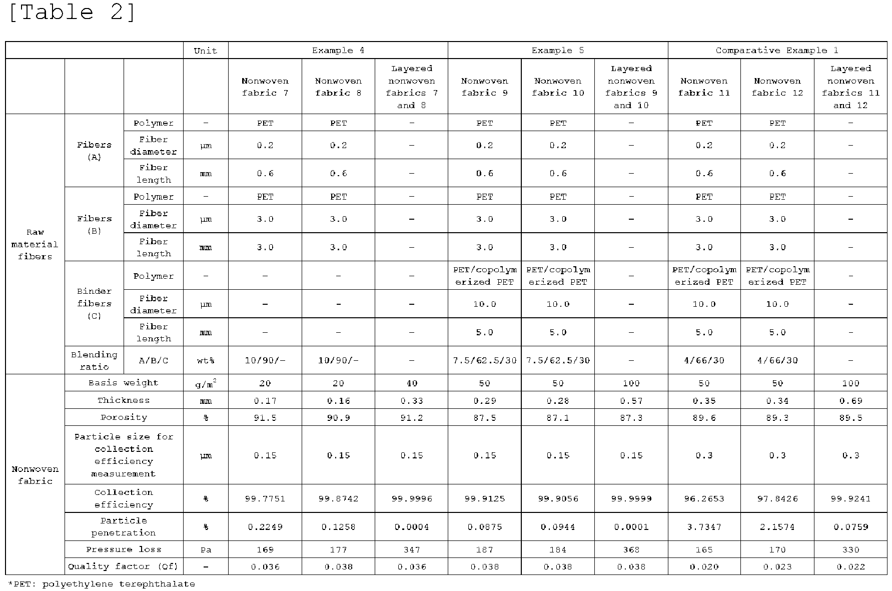

## Claims

1. An air-filter medium comprising a plurality of layers of nonwoven fabric and having a quality factor of 0.023 or more, wherein at least one of the layers of nonwoven fabric contains at least two types of organic fibers A and B having different fiber diameters, an average fiber diameter of the organic fiber A is 0.01 to 0.60 µm, and an average fiber diameter of the organic fiber B is 1.0 to 30 µm.

2. The air-filter medium according to claim 1, having a collection efficiency of 99.97% or more for particles having a particle size of 0.3 µm.

3. The air-filter medium according to claim 1, having a collection efficiency of 99.9995% or more for particles having a particle size of 0.15 µm.

4. The air-filter medium according to claim 1, wherein at least one of the layers of nonwoven fabric has a quality factor of 0.023 or more.

5. The air-filter medium according to claim 1, wherein the nonwoven fabric further contains a binder fiber.

6. An air filter comprising the air-filter medium according to any one of claims 1 to 5.

7. A fan filter unit comprising the air filter according to claim 6.

8. A cleanroom or semiconductor manufacturing equipment comprising the air filter according to claim 6.
